# EUROPEAN PATENT APPLICATION

(11) **EP 1 588 931 A2**
(43) Date of publication of application: **26.10.2005**
(21) Application number: 05252229.9
(22) Date of filing: 08.04.2005
(51) Int. Cl.: B62K 23/02, B62K 11/14, B62K 23/06

(54) **Vehicle steering handle device**

(30) Priority: 16.04.2004 JP 2004121186
(71) Applicant: HONDA MOTOR CO., Ltd., Tokyo (JP)
(72) Inventor: Iguchi, Hiroaki, c/o Kabushiki Kaisha Honda, Wako-shi Saitama (JP); Omagari, Masaharu, c/o Kabushiki Kaisha Honda, Wako-shi Saitama (JP); Inoue, Masahiro c/o Kabushiki Kaisha Honda, Wako-shi Saitama (JP)
(74) Representative: Stevens, Jason Paul

(57) **Abstract**

In a steering handle device for vehicles including a clutch lever (15) and a hot start lever (25) mounted to a rod-shape steering handle (10) having a grip (11) at an end at a position closer to the grip (11), a switch holder (12) for holding various switches (21-24) is mounted to the steering handle (10) at a position inside the grip (11) adjacently thereto. The hot start lever (25) is journalled on the lower surface of the switch holder (12), so that the user can operate the hot start lever (25) with his/her thumb of one hand (H) which is holding the grip (11) and simultaneously can turn off the clutch lever (15) with other fingers. This facilitates simultaneous operation of a handle lever and a hot start lever for a user with a hand which is holding a grip of a steering handle.

## Description

The present invention relates to an improvement of a vehicle steering handle device including a clutch lever and a hot start lever mounted to a rod-shaped steering handle of a motorcycle, a buggy, or the like, having grips at both ends thereof at positions close to each other.

The steering handle device for vehicles as described above is already known as shown, for example, in JP-A-2002-371944.

The hot start lever in the steering handle device for vehicles as described above is operated, especially when hot-starting an engine, to open a hot start valve of a carburettor for supplying new air to the engine to attenuate air-fuel mixture, thereby improving hot-startability.

The engine may be started in a state in which a clutch of a transmission system is disconnected by operating a clutch lever. However, since the hot start lever is mounted to the clutch lever in the steering handle device, in the related art, at least a certain extent of skill is required for a user to operate the clutch lever and the hot start lever simultaneously with one hand which is holding a grip of the steering handle.

In view of such circumstances, it is an object of the present invention to provide a steering handle device for vehicles which facilitates simultaneous operation of a clutch lever and a hot start lever for a user with a hand which is holding a grip of a steering handle.

In order to achieve the object described above, the present invention provides a steering handle device for vehicles including a clutch lever and a hot start lever mounted to a rod-shaped steering handle having a grip at an end, the clutch lever and the hot start lever mounted at positions close to the grip, characterized in that a switch holder for holding various switches is mounted to the steering handle at a position inside the grip adjacently thereto, and the hot start lever is rotatably mounted to the switch holder via a pivot so that the user can operate by a thumb of his/her one hand which is holding the grip.

The various switches may correspond to a lighting switch 21, a dimmer switch 22 and a kill switch 23 described in an embodiment of the present invention, described later.

In accordance with the present invention, when hot-starting the engine in a state in which a transmission is at a gear position other than neutral, the user can operate the hot start lever with his/her thumb and can turn off the clutch lever with other fingers as in the related art simultaneously and easily with his/her one hand which is holding the grip, whereby the hot-start operation of the engine can be performed extremely easily without necessity of the skill.

In a preferred form, the hot start lever is disposed on the switch holder at a position below the steering handle so that the user can push the same with a thumb of his/her one hand which is holding the grip.

In this preferred form, when the user stretches his/her thumb in a state of holding the grip, his/her thumb naturally reaches the hot start lever, whereby the pushing operation of the hot start lever by his/her thumb can be performed extremely easily.

In a further preferred form, the pivot is disposed at a position forwardly of, and close to the longitudinal centre of the steering handle with respect to, a push surface of the hot start lever.

In this further preferred form, when the hot start lever is rotated by the pushing operation of the user's thumb, the push surface rationally approaches his/her index finger of the hand which is holding the handle grip gradually, whereby the pushing operation can be performed extremely easily.

Preferred embodiments of the present invention will now be described by way of example only and with reference to the accompanying drawings, in which:
Fig 1 is a plan view of a steering handle device for vehicles according to an embodiment of the present invention;
Fig. 2 is a back view of the same (viewed in the direction of an arrow 2 in Fig. 1);
Fig. 3 is an enlarged cross-sectional view taken along a line 3-3 in Fig. 2; and
Fig. 4 is a bottom view of the same (viewed in the direction of an arrow 4 in Fig. 2).

In the description below, the front, rear, left and right are directions based on a vehicle.

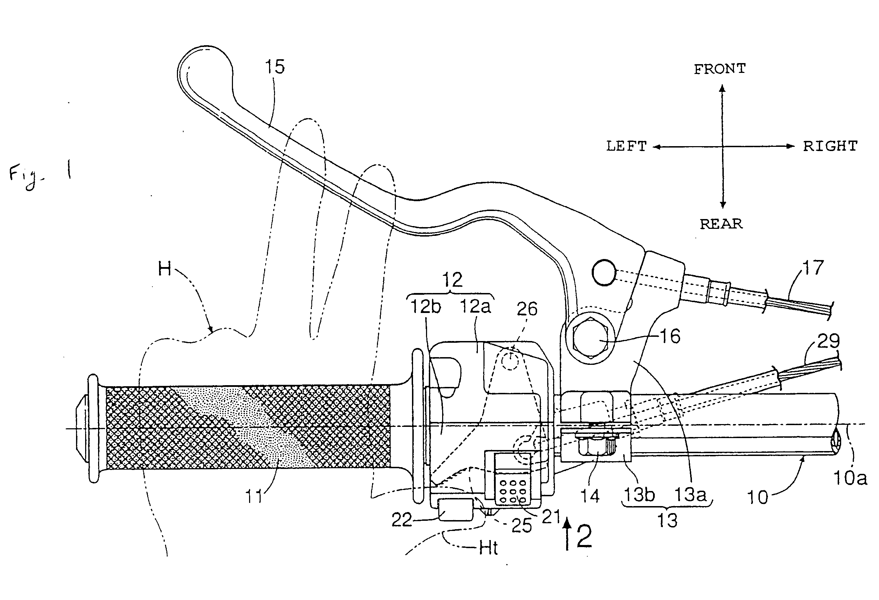

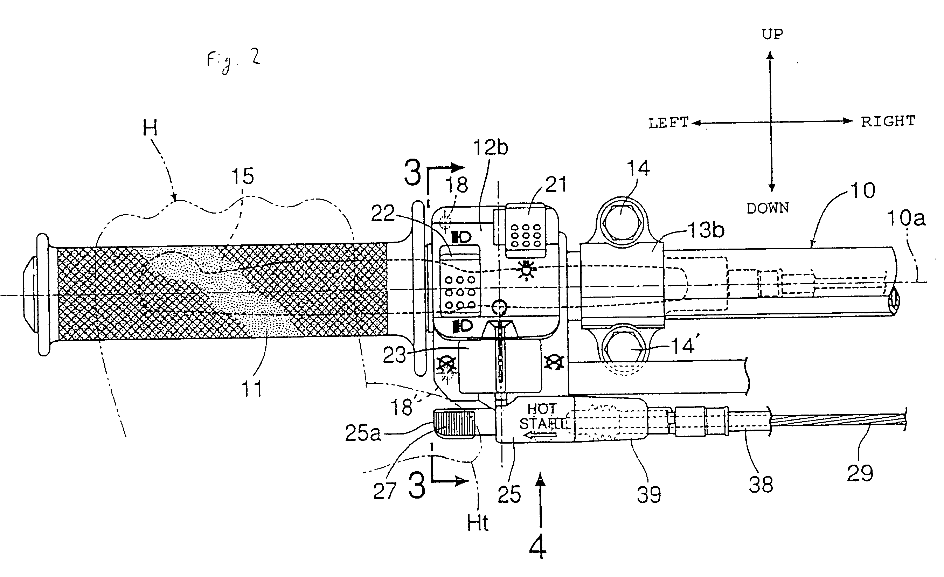

In Fig. 1 and Fig. 2, a reference sign H designates a steering handle employed for a buggy, a motorcycle, and the like, and a cylindrical grip 11 formed of resilient material such as rubber is fitted on the outer periphery at the left end thereof. A steering handle 10 is provided with a switch holder 12 mounted at a position inside the grip 11 adjacently thereto, and a lever holder 13 mounted at a position inside the switch holder 12 adjacently thereto.

The lever holder 13 includes a front lever holder half 13a to be fitted to the front half periphery of the steering handle 10, and a rear lever holder half 13b to be fitted to the rear half periphery thereof, and the both lever holder halves 13a, 13b are connected to each other by a pair of upper and lower connecting bolts 14, 14' so as to clamp the steering handle 10. A clutch lever 15 disposed forwardly of the grip 11 is mounted via a pivot 16. A clutch wire 17 continuing from a release member of a clutch (not shown) in a transmission system of the engine is connected to the clutch lever 15, so that when the clutch lever 15 is pulled toward the grip 11, the clutch wire 17 is pulled and hence the clutch can be disconnected.

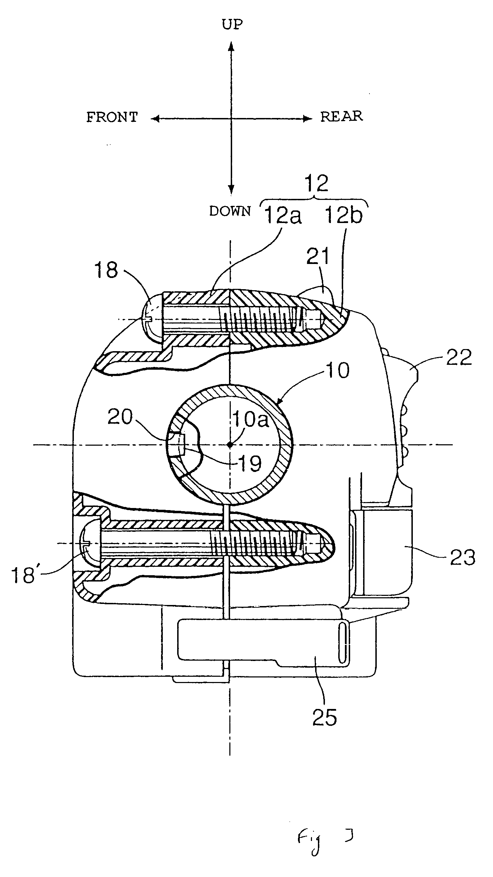

As shown in Fig. 3, the switch holder 12 includes a front switch holder half 12a to be fitted on the front half periphery of the steering handle 10 and a rear switch holder half 12b to be fitted on the rear half periphery thereof, and the both of the switch holder halves 13a, 13b are connected to each other by a pair of upper and lower connecting bolts 18, 18' in the state of clamping the steering handle 10 therebetween. At this time, a projection 19 formed on an inner surface of the front switch holder half 12a so as to project therefrom for registration of the switch holder 12 is fitted into a positioning hole 20 formed on the steering handle 10.

Referring again to Fig. 1 and Fig. 2, there are disposed a lighting switch 21 for controlling turning ON and OFF of a headlamp from above, a dimmer switch 22 for switching the direction of a beam from the headlamp between a high-beam and a low-beam, and a kill switch 23 for stopping the operation of the engine by deactivating an ignition circuit of the engine in sequence from above.

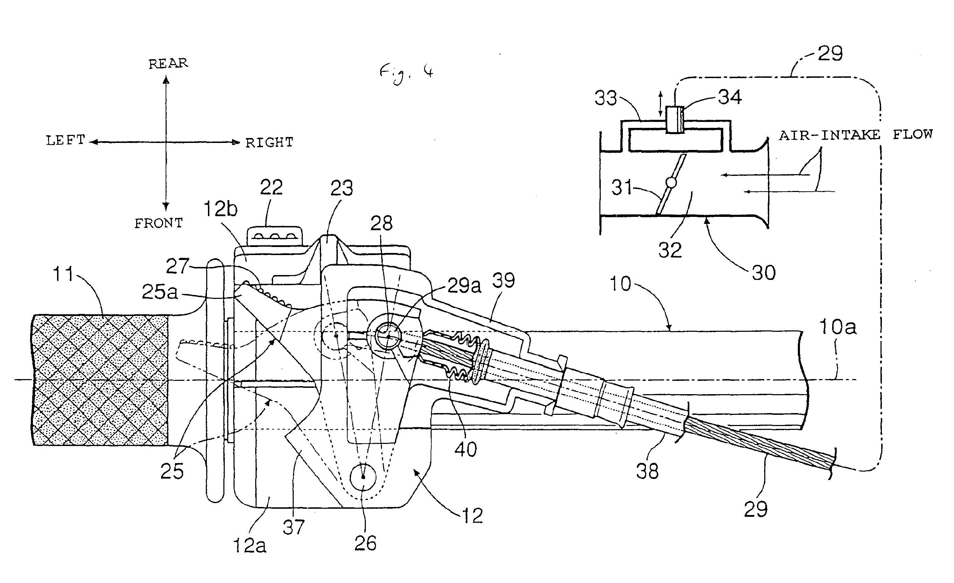

In Fig. 1, Fig. 2, and Fig. 4, a hot start lever 25 is mounted so as to be capable of rotating via a pivot 26 moving in the vertical direction on the lower surface of the front switch holder half 12a, which is located on the lower side of the steering handle 10. As is clearly shown in Fig. 4, the pivot 26 is disposed forwardly of an axis line 10a of the steering handle 10, and the hot start lever 25 is located rearwardly of the axis line 10a of the steering handle 10, and has a distal portion 25a projecting obliquely toward the rear and toward the grip 11. A push surface 27 provided with slip resistance is formed on the rear surface of the distal portion 25a. Therefore, the pivot 26 is disposed at a position forwardly of, and closer to the longitudinal centre of the steering handle 10 with respect to, the push surface 27 of the hot start lever 25.

The hot start lever 25 includes a wire connecting hole 28 at the midsection between the pivot 26 and the distal portion 25a, and a connecting terminal 29a at one end of a hot start wire 29 is fitted and connected thereto.

As shown in Fig. 4, a carburettor 30 of the engine includes an air-intake channel 32 opened and closed by a throttle valve 31 and continuing to an air-intake port of the engine, and an auxiliary air channel 33 connected to the air-intake channel 32 avoiding the throttle valve 31. A hot start valve 34 is provided in the auxiliary air channel 33 so as to open and close the same, and the other end of the hot start wire 29 is connected to the valve 34. Therefore, by pushing the push surface 27 and pulling the hot start lever 25 toward the grip 11, the hot start wire 29 can be pulled, and the hot start valve 34 can be opened.

The front switch holder half 12a is formed with a guide wall 37 which covers the lower surface of the hot start lever 25 to guide the rotation thereof, and the guide wall 37 is provided with an outer tube supporting portion 39 for retaining the outer tube 38 of the hot start wire 29. Provided between the end of the outer tube 38 and the hot start lever 25 is an elastic boot 40 for covering the hot start wire 29.

Subsequently, the operation of the present embodiment will be described.

When stopping the operation of the engine while it is hot, and then starting the engine again while it is still hot, the user first pushes the push surface 27 of the hot start lever 25 by a thumb Ht of one hand H which holds the grip 11 and rotates the lever 25 toward the grip 11, whereby the hot start valve 34 is opened. When the user cranks the engine in this state by a starting motor, new air which does not contain fuel is taken into the downstream side of the air-intake channel 32 via the auxiliary air channel 33 even when the throttle valve 31 is closed to an idling position. Accordingly, air-fuel mixture supplied from the air-intake channel 32 to the engine is suitably attenuated, and hence the engine can be started easily while avoiding excessive concentration of the air-fuel mixture.

In particular, since the hot start lever 25 is journalled on the lower surface of the switch holder 12, which is located on the lower side of the steering handle 10, and is provided with the push surface 27 pushed by the thumb Ht, the thumb Ht reaches the hot start lever 25 spontaneously by stretching the thumb Ht of the hand H which is holding the grip 11, so that the pushing operation of the hot start lever 25 by the thumb Ht can be performed extremely easily.

Since the pivot 26 of the hot start lever 25 is disposed at a position forwardly of, and closer to the longitudinal centre of the steering handle 10 with respect to, the push surface 27 of the hot start lever 25, when the hot start lever 25 is rotated by the pushing operation by the user's thumb, the push surface 27 rationally approaches his/her index finger of the hand H which is holding the handle grip 11 gradually, whereby the pushing operation can be performed further easily.

When starting the engine in a state in which the transmission is at a gear position other than neutral, it is necessary to disconnect the clutch. In such a case, the user can push-operate the hot start lever 25 with his/her thumb Ht and can turn off the clutch lever 15 with other fingers as in the related art simultaneously and easily with his/her hand H which is holding the grip 11 as shown in Fig. 1, whereby the hot-start operation of the engine can be performed extremely easily without necessity of the skill.

The present invention is not limited to the above-described embodiment, and various modifications in design may be made without departing the scope of the invention.

## Claims

1. A steering handle device for vehicles comprising:
a clutch lever (15) and a hot start lever (25) mounted to a rod-shaped steering handle (10) having a grip (11) at an end, at positions close to the grip (11),
**characterized in that** a switch holder (12) for holding various switches (21-24) is mounted to the steering handle (10) at a position inside the grip (11) adjacently thereto, and the hot start lever (25) is rotatably mounted to the switch holder (12) via a pivot (26) so that the user can operate by a thumb of one hand (H) of the user which is holding the grip (11).

2. The steering handle device for vehicles according to Claim 1, **characterized in that** the hot start lever (25) is disposed on the switch holder (12) at a position below the steering handle (10) so that the user can push the same with a thumb (Ht) of one hand (H) of the user which is holding the grip (11).

3. The steering handle device for vehicles according to Claim 2, **characterized in that** the pivot (26) is disposed at a position forwardly of, and closer to the longitudinal centre of the steering handle (10) with respect to, the push surface (27) of the hot start lever (25).
